# EUROPÄISCHE PATENTSCHRIFT

(11) **EP 2 123 342 B1**
(45) Veröffentlichungstag und Bekanntmachung des Hinweises auf die Patenterteilung: **02.05.2012**
(21) Anmeldenummer: 09006192.0
(22) Anmeldetag: 07.05.2009
(51) Int. Cl.: B01D 46/00, B01D 46/44, G01N 15/06

(54) **Verfahren und Vorrichtung zur Erfassung von Aerosolen und/oder strömenden Flüssigkeiten**
Device and method for measuring aerosols and/or flowing liquids
Procédé et dispositif de détection d'aérosols et/ou de liquides s'écoulant

(30) Priorität: 15.05.2008 DE 102008023739
(43) Veröffentlichungstag der Anmeldung: 25.11.2009
(73) Patentinhaber: FESTO AG & Co. KG, 73734 Esslingen (DE)
(72) Erfinder: Hartnagel, Rolf, 73732 Esslingen (DE); Pawlik, Gottfried, 71554 Weissach (DE); Völkl, Martin, 73105 Dürnau (DE); Mühlena, Manuel, 71364 Winnenden (DE)
(74) Vertreter: Vogler, Bernd

(56) Entgegenhaltungen:
- DE-A1- 4 140 478
- DE-U1- 9 400 480
- US-A- 5 271 750

## Beschreibung

Die Erfindung betrifft ein Verfahren und eine Vorrichtung zur Erfassung von Aerosolen und/oder Flüssigkeiten im Prozessgas einer prozesstechnischen Anlage.

In prozesstechnischen Anlagen sind aerosolbeladene Prozessgase ein Problem, da Aerosole als Verunreinigungen Schäden bei verschiedenen, mit Prozessgas ablaufenden Prozessen hervorrufen können. Daher ist es bereits seit langem bekannt, aerosolbeladenes Prozessgas bzw. belastetes Rohgas in sogenannten Koaleszensfiltern zu filtern, wobei die tröpfchenförmigen Aerosole am Filter abgeschieden werden und als Flüssigkeit ablaufen. Ferner kann es vorkommen, dass insbesondere bei hoher Flüssigkeitskonzentration Flüssigkeit nicht in Aerosolform sondern als Flüssigkeitsstrom vorliegt. Zur Abtrennung solcher das Rohgas begleitenden, strömenden Flüssigkeiten können in gewissem Maße ebenfalls Koaleszensfilter eingesetzt werden.

Bei der Filtration von Rohgas kann es beispielsweise infolge einer zu hohen Flüssigkeitsbelastung oder durch einen Filterdefekt vorkommen, dass Aerosol bzw. Flüssigkeit durchbricht und das gefilterte Reingas belastet. Ein Filterdefekt tritt häufig dann auf, falls sich der Koaleszensfilter mit Feststoffpartikeln zugesetzt hat. Um die Aerosol- bzw. Flüssigkeitsbelastung des Reingases zu überwachen, sind bereits Aerosolsensoren bekannt. Diese Aerosolsensoren sitzen aber nicht im Hauptstrom des Reingases, sondern es ist notwendig, einen Teilstrom des Reingases abzuzweigen und dem Aerosolsensor zuzuführen. Die Entnahme eines repräsentativen Teilstroms ist jedoch sehr schwierig, so dass die wahren Verhältnisse in dem Teilstrom oft nicht den Verhältnissen im Hauptstrom entsprechen. Ferner sind die Aerosolsensoren teuer und können oft nur bestimmte Aerosol- bzw. Flüssigkeitsarten exakt erfassen. Schließlich kann mit derartigen Aerosolsensoren lediglich ermittelt werden, dass das Reingas belastet ist, ein Schutzfunktion, die verhindert, dass Aerosol bzw. Flüssigkeit ins Reingas gelangt, haben sie nicht.

Die DE 41 40 478 A1 offenbart eine Überwachungseinrichtung mit Prüffilterkombination, mit einem im Hauptstromkanal angeordneten Hauptfilter und einer in einem Prüfgasstrom angeordneten Prüffilterkombination aus Prüffilter und Feinfilter. Am Prüffilter wird der Differenzdruck gemessen und falls sich der Prüffilter zusetzt, wird über ein Überwachungsgerät und eine daran angeschlossene Signalauslöseeinrichtung ein Signal abgegeben.

Die US 5,271,750 offenbart ein Luftfiltersystem mit einem Sicherheits-Nachfilter, wobei die Druckdifferenz im Nachfilter überwacht wird, wobei ein Differenzdruckanstieg am Nachfilter auf eine Leckage an den vorgeschalteten Filtern schließen lässt.

Die DE 94 00 480 U1 offenbart eine Luftfiltereinheit mit wenigstens einer Arbeitsfilterzelle, deren Zustand mittels eines Differenzdrucksensors überprüft werden kann.

Aufgabe der Erfindung ist es, ein Verfahren und eine Vorrichtung zur Erfassung von Aerosolen und/oder strömenden Flüssigkeiten der eingangs erwähnten Art zu schaffen, mit dem sich kostengünstig und zuverlässig Aerosole und/oder strömende Flüssigkeiten im Prozessgas einer prozesstechnischen Anlage erfassen lassen.

Diese Aufgabe wird durch ein Verfahren mit den Merkmalen des unabhängigen Anspruchs 1 und eine Vorrichtung mit den Merkmalen des unabhängigen Anspruchs 9 gelöst. Weiterbildungen der Erfindung sind in den Unteransprüchen dargestellt.

Das erfindungsgemäße Verfahren zur Erfassung von Aerosolen und/oder strömenden Flüssigkeiten im Prozessgas einer prozesstechnischen Anlage weist folgende Schritte auf:
- Zuführen von aerosolbeladenem und/oder von mit strömender Flüssigkeit begleitetem Rohgas in eine Filtereinrichtung mit wenigstens einem, eine Filterfeinheit aufweisenden Prozessfilter,
- Abscheiden des Aerosols aus dem Rohgas bzw. Abtrennen der strömenden Flüssigkeit vom Rohgas an dem wenigstens einen Prozessfilter, wobei nach dem Prozessfilter gefiltertes Reingas vorliegt,
- Zuführen des gefilterten Reingases in wenigstens einen Überwachungsfilter, der zumindest eine gleich hohe Filterfeinheit wie der vorgeschaltete Prozessfilter aufweist, und Überwachung des Differenzdrucks zwischen einer Anström- und einer Abströmseite des Überwachungsfilters, und des Differenzdrucks am wenigstens einen Prozessfilter, wobei ein gleichzeitiger Differenzdruckanstieg am Prozessfilter und am Überwachungsfilter eine Durchflussänderung anzeigt,
- Abgabe eines Alarmsignals falls der Differenzdruck am Überwachungsfilter ansteigt.

Das aerosolbeladene und/oder mit einem Flüssigkeitsstrom begleitete Rohgas gelangt also in eine Filtereinrichtung und wird dort durch wenigstens einen Prozessfilter, bei dem es sich um einen Koaleszensfilter handeln kann, gefiltert, wobei Aerosol abgeschieden bzw. der Flüssigkeitsstrom abgetrennt wird. Danach gelangt das gefilterte Reingas in den Überwachungsfilter, bei dem eine Differenzdrucküberwachung zwischen der Anström- bzw. Abströmseite durchgeführt wird. Im störungsfreien Betrieb wird in der Filtereinrichtung bereits das gesamte Aerosol bzw. die gesamte strömende Flüssigkeit abgeschieden bzw. abgetrennt, so dass unbelastetes Reingas in den Überwachungsfilter eintritt. Im Überwachungsfilter wird daher nichts abgeschieden bzw. abgetrennt, wodurch der Differenzdruck nicht ansteigt. Dies ist ein Maß dafür, dass der vorgeschaltete, wenigstens eine Prozessfilter zuverlässig arbeitet. Wird hingegen am Überwachungsfilter Aerosol bzw. strömende Flüssigkeit abgeschieden bzw. abgetrennt, so kommt es zu einem Differenzdruckanstieg am Überwachungsfilter. Dies führt zur Abgabe eines Alarmsignals, beispielsweise in akustischer und/oder optischer Form, das anzeigt, dass ein Störfall vorliegt. Auch elektrische Signale, insbesondere zur Ferndiagnose sind denkbar. Daraufhin können geeignete Gegenmaßnahmen eingeleitet werden. Bevorzugterweise handelt es sich bei dem Prozessgas um Druckluft.

Die Überwachung bzw. Erfassung von Aerosol bzw. Flüssigkeit im Prozessgas-erfolgt also über einen zusätzliche Überwachungs- bzw. Polizeifilter, der mindestens dieselbe Filterfeinheit besitzt als der vorgeschaltete Prozessfilter. Im Vergleich zu den vorgenannten Aerosolsensoren ist ein zusätzlicher Filter wesentlich kostengünstiger. Ferner übt der Überwachungsfilter auch eine zusätzliche Schutzfunktion aus, d.h. die Aerosol- bzw. Flüssigkeitsbelastung gelangt nicht ins System, da am Überwachungsfilter eine zusätzliche Filtration des Reingases vorgenommen wird. Die vorgenannten Aerosolsensoren können eine solche Schutzfunktion nicht ausüben.

Zweckmäßigerweise befindet sich der Überwachungsfilter im Hauptströmungsweg des Prozessgases. Es wird also der komplette Prozessgasstrom überwacht. Dadurch können insbesondere auch Flüssigkeits-Wandströmungen mit erfasst werden, die im Falle des Einsatzes von Aerosolsensoren und des Abzweigens eines Teilstroms nicht mit erfasst werden.

Bei einer Weiterbildung der Erfindung erfolgt die Abscheidung bzw. Abtrennung von Aerosol bzw. strömender Flüssigkeit in mehreren Filterstufen der mit mehreren in Reihe geschalteten Prozessfiltern ausgestatteten Filtereinrichtung. Dabei besitzen die Prozessfilter in Strömungsrichtung sich erhöhende Filterfeinheiten, wobei der in Strömungsrichtung letzte Prozessfilter, die mindestens notwendige Filterfeinheit des nachgeschalteten Überwachungsfilters bestimmt. Die Filtration kann also in einer sogenannten Filterkaskade erfolgen.

Um die Abhängigkeit des Differenzdrucksignals am Überwachungsfilter von Durchflussänderungen zu berücksichtigen, ist es zweckmäßig, den Durchfluss an Prozessgas mittels eines Durchflussmessgerätes zu ermitteln. Als Durchflussmessgerät kann beispielsweise ein Durchflusssensor eingesetzt werden.

Der Durchfluss des Prozessgases wird überwacht, in dem der Differenzdruck am wenigstens einen Prozessfilter, insbesondere bei mehreren in Reihe geschalteten Prozessfiltern beim in Strömungsrichtung letzten Prozessfilter, und der Differenzdruck am Überwachungsfilter überwacht werden, wobei ein gleichzeitiger Differenzdruckanstieg am Prozessfilter und am Überwachungsfilter, ohne dass sich die Relation der beiden Differenzdrücke zueinander ändert, eine Durchflussänderung anzeigt. Dadurch kann auf teure Durchflusssensoren verzichtet werden. Allerdings lässt sich dadurch lediglich der Durchfluss überwachen und nicht messen.

Es ist zweckmäßig, einen Mindest-Druckanstieg des Differenzdruckes am Überwachungsfilter vorzugeben, der überschritten werden muss, damit ein Alarmsignal abgegeben wird. Dadurch wird verhindert, dass kleine, unschädliche Druckanstiege ein Alarmsignal auslösen.

Die erfindungsgemäße Vorrichtung zur Erfassung von Aerosolen und/oder strömenden Flüssigkeiten im Prozessgas einer prozesstechnischen Anlage, weist eine, mehrere in Reihe geschaltete, mit in Strömungsrichtung des Prozessgases erhöhenden Filterfeinheiten ausgestattete Prozessfilter aufweisende Filtereinrichtung zum Abscheiden von Aerosol aus einem aerosolbeladenen Rohgas bzw. Abtrennen von das Rohgas begleitender Flüssigkeit auf, wobei die Filtereinrichtung wenigstens einen, zumindest die gleich hohe Filterfeinheit wie der vorgeschaltete in Strömungsrichtung letzte Prozessfilter besitzenden in Reihe hinter dem letzten Prozessfilter angeordneten Überwachungsfilter, der mit Differenzdruck-Überwachungsmitteln zur Überwachung des Differenzdrucks zwischen einer Anström- und einer Abströmseite des Überwachungsfilters und einem Signalgeber zur Abgabe eines Alarmsignals bei Ansteigens des Differenzdrucks, gekoppelt ist.

Der wenigstens eine Prozessfilter und der Überwachungsfilter können eine Baugruppe bilden. Beispielsweise ist es möglich, dass der wenigstens eine Prozessfilter und der Überwachungsfilter Teil einer Wartungseinheit sind, die noch durch weitere Funktionsgeräte, beispielsweise Durchflussregler usw., ergänzt ist. Es ist jedoch auch möglich, einen separaten Überwachungsfilter einzusetzen, wodurch dann bereits bestehende Anlagen nachgerüstet werden können.

Bevorzugte Ausführungsbeispiele der Erfindung sind in der Zeichnung dargestellt und werden im Folgenden näher erläutert. In der Zeichnung zeigen:
- Fig. 1: eine schematische Darstellung eines ersten Ausfüh- rungsbeispiels der erfindungsgemäßen Vorrichtung, die bei im Wesentlichen konstanten Durchflüssen einsetzbar ist,
- Fig. 2: ein zweites Ausführungsbeispiel der erfindungsgemä- ßen Vorrichtung, die bei Durchflussänderungen ein- setzbar ist,
- Fig. 3: ein drittes Ausführungsbeispiel der erfindungsgemä- ßen Vorrichtung, die ebenfalls bei Durchflussände- rungen einsetzbar ist und
- Fig. 4: ein schematisches Diagramm des Verlaufs des Diffe- renzdrucks über der Zeit betreffend die in der er- findungsgemäßen Vorrichtung eingesetzten Filter:

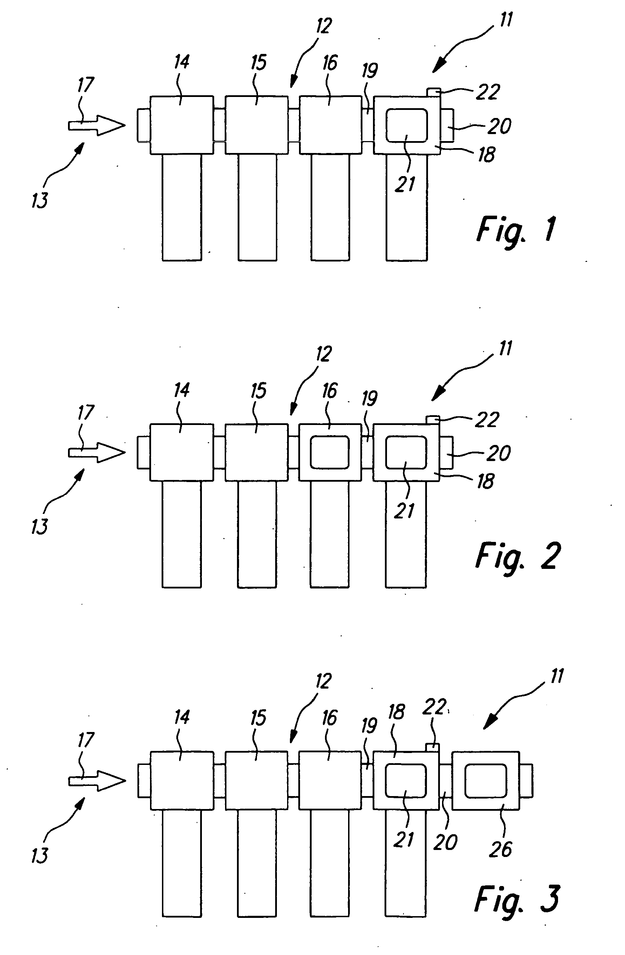

Fig. 1 zeigt ein erstes Ausführungsbeispiel der erfindungsgemäßen Vorrichtung zur Erfassung von Aerosolen und/oder strömenden Flüssigkeiten bzw. Flüssigkeitsströmen im Prozessgas einer prozesstechnischen Anlage. Die Vorrichtung 11 besitzt eine Filtereinrichtung 12, die in einen Hauptströmungsweg 13 des Prozessgases in Form von Druckluft integriert ist.

Die Filtereinrichtung 12 besitzt mehrere in Reihe hintereinander angeordnete Prozessfilter 14, 15, 16, wobei Fig. 1 beispielhaft drei dieser Prozessfilter 14, 15, 16 zeigt. An der Eingangsseite des ersten Prozessfilters 14, der als Grobfilter ausgestaltet ist, tritt mit Aerosolen beladene Druckluft bzw. von einem Flüssigkeitsstrom begleitete Druckluft in die Filtereinrichtung 12 ein. Der Grobfilter kann beispielsweise mit einer Porengröße im Bereich von ca. 5µ ausgestattet sein.

In Strömungsrichtung 17 nach dem Grobfilter ist der zweite Prozessfilter 15 angeordnet, der als sogenannter Feinfilter ausgestaltet ist. Der Feinfilter kann beispielsweise mit einer Porengröße im Bereich von ca. 1µ ausgestattet sein. In Strömungsrichtung nach dem Feinfilter sitzt ein weiterer Prozessfilter 16, der auch als Feinstfilter bezeichnet werden kann. Der Feinstfilter hat beispielsweise eine Porengröße im Bereich von ca. 0,01µ. Die Filtration der mit Aerosolen bzw. Flüssigkeit belasteten Rohluft erfolgt in einer Filterkaskade aus beispielsweise drei hintereinander geschalteten Prozessfiltern 14, 15, 16. Bei den Prozessfiltern 15, 16 handelt es sich um Koaleszensfilter, die sich dadurch auszeichnen, dass der Differenzdruck am jeweiligen Filter 15, 16 bei Beaufschlagung mit Aerosol oder Flüssigkeit bis zu Sättigung ansteigt. Im Sättigungsfall ist nach wie vor die volle Abscheideleistung vorhanden.

Bei den Verunreinigungen der Druckluft, die herausgefiltert werden sollen, handelt es sich meistens um Öl, das in Aerosolform, also in kleinen Tröpfchen in der Druckluft oder als Flüssigkeitsstrom, insbesondere als Wandströmung in einer Prozessleitung, vorliegt.

Zur Filtereinrichtung 12 gehört ferner noch ein Überwachungsfilter 18, der in Strömungsrichtung 17 hinter dem letzten Prozessfilter 16 angeordnet ist. Der Überwachungsfilter 18 besitzt die gleich hohe Filterfeinheit, wie der in Strömungsrichtung 17 letzte Prozessfilter 16, d.h. beispielsweise kann er eine Porengröße im Bereich von ca. 0,01µ aufweisen. Die in der Filterkaskade der Prozessfilter 14, 15, 16 gefilterte Druckluft tritt als Reinluft am Ausgang des letzten Prozessfilters 16 aus und gelangt von dort zum Überwachungsfilter 18. Am Überwachungsfilter 18 wird der Differenzdruck zwischen dessen Anströmseite 19 und dessen Abströmseite 20 überwacht. Hierzu werden Differenzdrucküberwachungsmittel eingesetzt, zu denen eine Differenzdruckanzeige 21 an der Außenseite des Überwachungsfilters 18 gehört. Ferner besitzt der Überwachungsfilter 18 einen Signalgeber 22 zur Abgabe eines Alarmsignals falls der Differenzdruck ansteigt. Als Signalgeber 22 wird beispielsweise ein kombinierter akustischer und optischer Signalgeber 22 eingesetzt.

Bei dem Verfahren zur Erfassung der ölbeladenen Druckluft wird zunächst die ölbeladene oder von einem Ölstrom begleitete Druckluft der Filtereinrichtung 12 zugeführt. Dabei gelangt die Rohluft zunächst in den Grobfilter, wo Partikel, die größer als die Porengröße des Grobfilters sind, abgeschieden werden. Dies sind also beispielsweise Partikel mit einer Größte ≥ 5µ. Im Gröbfilter erfolgt auch zumindest eine teilweise Abtrennung des Ölstroms, der die Druckluft begleitet.

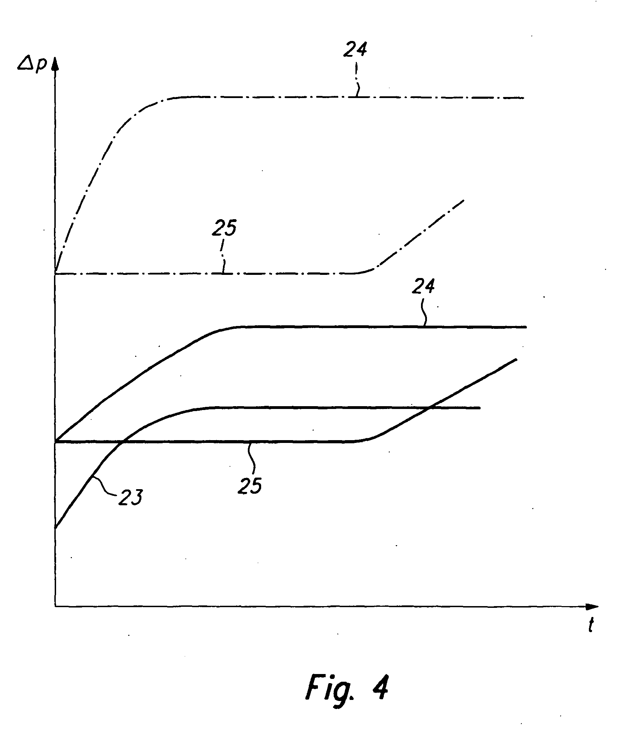

Die vorgefilterte Druckluft gelangt nun in den in Strömungsrichtung nach dem Grobfilter angeordneten zweiten Prozessfilter 15, der als Feinfilter ausgestaltet ist. Dort findet eine weitere Abscheidung statt, beispielsweise werden öltröpfchen mit einer Größer ≥ 1µ herausgefiltert. In Fig. 4 ist der Differenzdruckverlauf 23 am Feinfilter über der Zeit dargestellt. Es ist zu erkennen, dass es zunächst zu einem Anstieg des Differenzdruckes zwischen der Eingangs- und Ausgangsseite des Feinfilters kommt, da ein Abscheidevorgang stattfindet. Nach einer bestimmten Abscheidezeit wird der Sättigungsgrad des Feinfilters erreicht, wodurch kein Anstieg des Differenzdruckes mehr stattfindet. Im Sättigungsbereich findet aber dennoch eine zuverlässige Abscheidung im Feinfilter statt.

Nach dem Feinfilter gelangt die Druckluft in den Feinstfilter, wo eine nochmalige Filterung stattfindet. Beispielsweise kann der Feinstfilter derart ausgelegt sein, dass Öltröpfchen mit einer Größe ≥ 0,01µ abgeschieden werden. In Fig. 4 ist hierzu der Druckverlauf 24 des Differenzdrucks über der Zeit im Feinstfilter, d.h. im dritten Prozessfilter 16, dargestellt. Es ist wieder zu erkennen, dass zunächst ein Anstieg des Differenzdrucks stattfindet, da ein Abscheidevorgang stattfindet. Schließlich wird nach einer bestimmten Abscheidezeit der Sättigungsbereich des Feinstfilters erreicht, indem es zu keinem Druckanstieg des Differenzdruckes mehr kommt. Aber auch hier findet im Sättigungsbereich eine zuverlässige Abscheidung im Feinstfilter statt.

Schließlich gelangt die gefilterte Druckluft, die jetzt als gefilterte Reinluft zu bezeichnen ist, zur Anströmseite 19 des Überwachungsfilters 18, tritt durch den Überwachungsfilter 18 hindurch und strömt an der Abströmseite 20 aus.

Im störungsfreien Betrieb werden in den Prozessfiltern 14, 15, 16 alle Ölaerosole herausgefiltert, bis die Luftreinheit der Spezifikation des letzten Prozessfilters 16 entspricht. Durch den Überwachungsfilter strömt also im Wesentlichen unbeladene Druckluft. In Fig. 4 ist wiederum der Differenzdruckverlauf 25 im Überwachungsfilter 18 über der Zeit dargestellt. Es ist zu erkennen, dass für den Fall, dass sämtliche Öltröpfchen durch die vorgeschaltete Filterkaskade der Prozessfilter 14, 15, 16 herausgefiltert wurden, kein Druckanstieg des Differenzdruck erfolgt. Es dringt also kein Öl durch, so dass auch keine Abscheidung im Überwachungsfilter stattfindet.

Bricht jedoch Öl durch, so kommt es im Überwachungsfilter 18 zu einem Druckanstieg des Differenzdrucks, der im Druckverlauf 25 durch den nach oben abknickenden Verlauf dargestellt ist. Es liegt also ein Störfall vor. In diesem Fall wird durch den Signalgeber 22 ein optisches und/oder akustisches Alarmsignal abgegeben, wodurch geeignete Gegenmaßnahmen eingeleitet werden können. Beispielsweise können die Prozessfilter 14, 15, 16 nach einem Filterdefekt untersucht werden. Von großem Vorteil ist, dass der Überwachungsfilter 18 eine Schutzfunktion übernimmt, d.h. am Überwachungsfilter 18 findet ein Filtervorgang statt, wodurch durchgebrochenes Öl abgeschieden wird. Dadurch ist es gewährleistet, dass das Öl nicht in das System gelangt und dort zu Schäden führt. Um das Ansprechen des Signalgebers 22 auch bei kleineren, unschädlichen Differenzdruckanstiegen zu verhindern, wird zweckmäßigerweise ein Schwellwert des Druckanstiegs festgelegt, der überschritten werden muss, damit der Signalgeber 22 anspricht.

Fig. 2 zeigt ein zweites Ausführungsbeispiel der erfindungsgemäßen Vorrichtung 11. Es unterscheidet sich vom ersten Ausführungsbeispiel dadurch, dass hier Druckänderungen, die auf den Differenzdruck im Überwachungsfilter 18 Einfluss haben mit berücksichtigt werden können. Der Aufbau entspricht dem des ersten Ausführungsbeispiels, wobei wieder in Strömungsrichtung 17 hintereinander angeordnete Prozessfilter 14, 15, 16 vorgesehen sind, an denen es zu einer Abscheidung von Öltröpfchen aus der Druckluft kommt. Ferner ist in Strömungsrichtung 17 nach dem letzten der Prozessfilter 16, also dem Feinstfilter, ein Überwachungsfilter 18 eingeschaltet. Im Gegensatz zum ersten Ausführungsbeispiel wird hier der Differenzdruck auch beim Feinstfilter überwacht. Der Prozessfilter 16 und der Überwachungsfilter 18 bilden also gemeinsam einen Durchflusswächter. In Fig. 4 ist wiederum der Druckverlauf 24 des Differenzdrucks über der Zeit im Feinstfilter und der Druckverlauf 25 des Differenzdrucks über der Zeit im Überwachungsfilter 18 dargestellt. Kommt es jetzt zu einer Durchflussschwankung, so erhöht sich gleichzeitig der Differenzdruck im Feinstfilter und im Überwachungsfilter 18, so dass die in Fig. 4 in strichpunktierten Linien dargestellten Druckverläufe 24, 25 vorliegen. Liegt also ein solcher plötzlicher Drucksprung vor, so ist das ein Zeichen für eine Durchflussschwankung. Um einen solchen plötzlichen Druckanstieg in Folge einer Durchflussschwankung von einem Störfall unterscheiden zu können, muss also im Überwachungsfilter 18 zusätzlich zu einem vorgegebenen Mindest-Druckanstieg die Steigung des Druckverlaufs 25 über einen bestimmten Zeitabschnitt ermittelt werden.

Schließlich zeigt Fig. 3 ein drittes Ausführungsbeispiel der erfindungsgemäßen Vorrichtung. Es unterscheidet sich von den zuvor beschriebenen Ausführungsbeispielen dadurch, dass mit einer derartigen Vorrichtung ebenfalls Durchflussschwankungen berücksichtigt und gemessen werden können. Es ist hierzu eine Durchflussmesseinrichtung in Form eines Durchflusssensors 26 vorgesehen, über den der Durchfluss ermittelt wird, wodurch sich dann Durchflussschwankungen genau ermitteln lassen.

## Patentansprüche

1. Verfahren zur Erfassung von Aerosolen und/oder strömenden Flüssigkeiten im Prozessgas einer prozesstechnischen Anlage, das Verfahren mit folgenden Schritten:
- Zuführen von aerosolbeladenem und/oder von mit strömender Flüssigkeit begleitetem Rohgas in eine Filtereinrichtung (12) mit wenigstens einem, eine Filterfeinheit aufweisenden Prozessfilter (14, 15, 16),
- Abscheiden des Aerosols aus dem Rohgas bzw. Abtrennen der strömenden Flüssigkeit vom Rohgas an dem wenigstens einen Prozessfilter (14, 15, 16), wobei nach dem Prozessfilter (14, 15, 16) gefiltertes Reingas vorliegt,
- Zuführen des gefilterten Reingases in wenigstens einen Überwachungsfilter (18), der im Wesentlichen die gleiche Filterfeinheit wie der vorgeschaltete Prozessfilter (16) aufweist, und Überwachung des Differenzdrucks zwischen einer Anström- und einer Abströmseite (19, 20) des Überwachungsfilters (18), und des Differenzdrucks am wenigstens einen Prozessfilter (14, 15, 16), wobei ein gleichzeitiger Differenzdruckanstieg am Prozessfilter (16) und am Überwachungsfilter (18) eine Durchflussänderung anzeigt.
- Abgabe eines Alarmsignals falls der Differenzdruck am Überwachungsfilter (18) ansteigt.

2. Verfahren nach Anspruch 1, **dadurch gekennzeichnet, dass** die Abscheidung bzw. Abtrennung von Aerosol bzw. strömender Flüssigkeit in mehreren Filterstufen, der mit mehreren in Reihe geschalteten Prozessfilter (14, 15, 16) ausgestatteten Filtereinrichtung (12) erfolgt, wobei die Prozessfilter (14, 15, 16) in Strömungsrichtung (17) sich erhöhende Filterfeinheiten besitzen und der in Strömungsrichtung (17) letzte Prozessfilter (16) die im Wesentlichen notwendige Filterfeinheit des nachgeschalteten Überwachungsfilters (18) bestimmt.

3. Verfahren nach Anspruch 1 oder 2, **dadurch gekennzeichnet, dass** der Überwachungsfilter (18) in einen Hauptströmungsweg (13) des Prozessgases eingeschaltet ist.

4. Verfahren nach einem der vorhergehenden Ansprüche, **dadurch gekennzeichnet, dass** der Durchfluss an Prozessgas mittels eines Durchflussmessgeräts ermittelt wird.

5. Verfahren nach Anspruch 4, **dadurch gekennzeichnet, dass** es sich bei dem Durchflussmessgerät um einen Durchflusssensor (26) handelt.

6. Verfahren nach einem der vorhergehenden Ansprüche, **dadurch gekennzeichnet, dass** ein Mindest-Druckanstieg des Differenzdruckes am Überwachungsfilter (18) vorgegeben wird, der zur Abgabe eines Alarmsignals überschritten werden muss.

7. Verfahren nach einem der vorhergehenden Ansprüche, **dadurch gekennzeichnet, dass** bei mehreren in Reihe geschalteten Prozessfiltern (14, 15, 16) der Differenzdruck am in Strömungsrichtung letzten Prozessfilter (16) überwacht wird.

8. Verfahren nach einem der vorhergehenden Ansprüche, **dadurch gekennzeichnet, dass** es sich bei dem Prozessgas um Druckluft handelt.

9. Vorrichtung zur Erfassung von Aerosolen und/oder strömenden Flüssigkeiten im Prozessgas einer prozesstechnischen Anlage, wobei die Vorrichtung umfasst:
- eine Filtereinrichtung (12) mit wenigstens einem, eine Filterfeinheit aufweisenden Prozessfilter, zum Abscheiden von Aerosol aus einem aerosolbeladenen Rohgas bzw. Abtrennen von das Rohgas begleitender, strömender Flüssigkeit,
- und mit einem dem Prozessfilter nachgeschalteten Überwachungsfilter, der im Wesentlichen die gleiche Filtereinheit wie der vorgeschaltete Prozessfilter aufweist,
- Differenzdrucküberwachungsmittel, die sowohl dem Prozessfilter als auch dem Überwachungsfilter zugeordnet sind zur Überwachung des Differenzdrucks zwischen einer Anström- und einer Abströmseite des Prozessfilters und zwischen einer Anström- und Abströmseite des Überwachungsfilters derart, dass Prozessfilter und Überwachungsfilter gemeinsam einen Durchflusswächter bilden und
- einen Signalgeber zur Abgabe eines Alarmsignals bei Ansteigen des Differenzdruckes am Überwachungsfilter.

10. Vorrichtung nach Anspruch 9, **dadurch gekennzeichnet, dass** der wenigstens eine Prozessfilter (14, 15, 16) und der Überwachungsfilter (18) eine Baugruppe bilden.

11. Vorrichtung nach einem der Ansprüche 9 oder 10, **dadurch gekennzeichnet, dass** ein Durchflussmessgerät zur Messung des Durchflusses an Prozessgas vorgesehen ist.

12. Vorrichtung nach Anspruch 11, **dadurch gekennzeichnet, dass** das Durchflussmessgerät von einem Durchflusssensor (26) gebildet ist.

13. Vorrichtung nach Anspruch 12, **dadurch gekennzeichnet, dass** als Prozessgas Druckluft vorgesehen ist.

## Claims

1. Method for the detection of aerosols and/or flowing fluids in the process gas of a process engineering plant, said method having the following steps:
- feeding of aerosol-laden crude gas and/or crude gas accompanied by flowing fluid into a filter device (12) with at least one process filter (14, 15, 16) which has a degree of filter fineness,
- removal of the aerosol from the crude gas and/or separation of the flowing fluid from the crude gas at the process filter or filters (14, 15, 16), wherein clean gas is present downstream of the process filter (14, 15, 16),
- feeding of the filtered clean gas to at least one monitoring filter (18), which has substantially the same degree of filter fineness as the upstream process filter (16), and monitoring of the differential pressure between an inflow and an outflow side (19, 20) of the monitoring filter (18), and of the differential pressure at one or more process filters (14, 15, 16), wherein a simultaneous differential pressure rise at the process filter (16) and at the monitoring filter (18) indicates a change in flow rate,
- emission of an alarm signal if the differential pressure at the monitoring filter (18) rises.

2. Method according to claim 1, **characterised in that** the removal or separation of aerosol or flowing fluid is effected in several filtration stages of the filter device (12) equipped with several process filters (14, 15, 16) connected in series, wherein the process filters (14, 15, 16) have increasing filter fineness in the direction of flow (17), and the last process filter (16) in the flow direction (17) determines the substantially necessary filter fineness of the downstream monitoring filter (18).

3. Method according to claim 1 or 2, **characterised in that** the monitoring filter (18) is inserted in a main flow path (13) of the process gas.

4. Method according to any of the preceding claims, **characterised in that** the flow rate of process gas is determined by means of a flow meter.

5. Method according to claim 4, **characterised in that** the flow meter is a flow sensor (26).

6. Method according to any of the preceding claims, **characterised in that** a minimum pressure rise of the differential pressure at the monitoring filter (18) is preset, and must be exceeded for an alarm signal to be given.

7. Method according to any of the preceding claims **characterised in that**, in the case of several process filters (14, 15, 16) connected in series, the differential pressure at the last process filter (16) in the direction of flow is monitored.

8. Method according to any of the preceding claims, **characterised in that** the process gas is compressed air.

9. Device for the detection of aerosols and/or flowing fluids in the process gas of a process engineering plant, wherein the device comprises:
- a filter device (12) with at least one process filter (14, 15, 16) which has a degree of filter fineness, for removal of aerosol from an aerosol-laden crude gas or the separation of flowing fluid accompanying the crude gas,
- and with a monitoring filter downstream of the process filter and with substantially the same filter fineness as the upstream process filter,
- differential pressure monitoring means which are assigned to both the process filter and the monitoring filter for monitoring the differential pressure between an inflow and an outflow side of the process filter and between an inflow and an outflow side of the monitoring filter in such a way that process filter and monitoring filter together form a flow monitor and
- a signal generator to give an alarm signal if there is a rise in differential pressure at the monitoring filter.

10. Device according to claim 9, **characterised in that** the process filter or filters (14, 15, 16) and the monitoring filter (18) form an assembly.

11. Device according to one of claims 9 or 10, **characterised in that** a flow meter is provided to measure the flow of process gas.

12. Device according to claim 11, **characterised in that** the flow meter is formed by a flow sensor (26).

13. Device according to claim 12, **characterised in that** compressed air is provided as process gas.

## Revendications

1. Procédé de détection d'aérosols et/ou de liquides s'écoulant dans le gaz de processus d'une installation technique de processus, le procédé comprenant les étapes suivantes :
- amenée de gaz brut chargé en aérosol et/ou accompagné de liquide s'écoulant dans un dispositif de filtration (12) avec au moins un filtre de processus (14, 15, 16) présentant une finesse de filtration,
- extraction de l'aérosol du gaz brut ou séparation du liquide s'écoulant du gaz brut sur au moins un filtre de processus (14, 15, 16), sachant que du gaz purifié filtré se présente après le filtre de processus (14, 15, 16),
- amenée du gaz purifié filtré dans au moins un filtre de surveillance (18) qui présente sensiblement la même finesse de filtration que le filtre de processus (16) monté en amont, et surveillance de la pression différentielle entre un côté d'afflux et un côté d'évacuation (19, 20) du filtre de surveillance (18), et de la pression différentielle sur au moins un filtre de processus (14, 15, 16), sachant qu'une augmentation de pression différentielle simultanée sur le filtre de processus (16) et sur le filtre de surveillance (18) indique une modification de débit.
- émission d'un signal d'alarme si la pression différentielle sur le filtre de surveillance (18) augmente.

2. Procédé selon la revendication 1, **caractérisé en ce que** l'extraction ou la séparation de l'aérosol ou du liquide s'écoulant en plusieurs étapes de filtration est effectuée avec un dispositif de filtration (12) équipé de plusieurs filtres de processus (14, 15, 16) montés en série, sachant que les filtres de processus (14, 15, 16) possèdent des finesses de filtration augmentant dans le sens d'écoulement (17) et le dernier filtre de processus (16) dans le sens d'écoulement (17) détermine la finesse de filtration sensiblement nécessaire du filtre de surveillance (18) monté en aval.

3. Procédé selon la revendication 1 ou 2, **caractérisé en ce que** le filtre de surveillance (18) est inséré dans une voie d'écoulement principal (13) du gaz de processus.

4. Procédé selon l'une quelconque des revendications précédentes, **caractérisé en ce que** le débit de gaz de processus est déterminé à l'aide d'un débitmètre.

5. Procédé selon la revendication 4, **caractérisé en ce qu'**il s'agit pour le débitmètre d'un capteur de débit (26).

6. Procédé selon l'une quelconque des revendications précédentes, **caractérisé en ce qu'**une montée de pression minimale de la pression différentielle est prescrite sur le filtre de surveillance (18), laquelle doit être dépassée pour l'émission d'un signal d'alarme.

7. Procédé selon l'une quelconque des revendications précédentes, **caractérisé en ce que** pour plusieurs filtres de processus (14, 15, 16) montés en série, la pression différentielle est surveillée sur le dernier filtre de processus (16) dans le sens d'écoulement.

8. Procédé selon l'une quelconque des revendications précédentes, **caractérisé en ce qu'**il s'agit d'air comprimé pour le gaz de processus.

9. Dispositif de détection d'aérosols et/ou de liquides s'écoulant dans le gaz de processus d'une installation technique de processus, sachant que le dispositif comporte :
- un dispositif de filtration (12) avec au moins un filtre de processus présentant une finesse de filtration pour l'extraction d'aérosol d'un gaz brut chargé en aérosol ou la séparation de liquide s'écoulant, accompagnant le gaz brut,
- et avec un filtre de surveillance monté en aval du filtre de processus, qui présente sensiblement la même unité de filtration que le filtre de processus monté en amont,
- des moyens de surveillance de pression différentielle qui sont associés non seulement au filtre de processus mais aussi au filtre de surveillance pour la surveillance de la pression différentielle entre un côté d'afflux et un côté d'évacuation du filtre de processus et entre un côté d'afflux et d'évacuation du filtre de surveillance de telle manière que le filtre de processus et le filtre de surveillance forment ensemble un contrôleur de débit et
- un générateur de signaux pour l'émission d'un signal d'alarme en cas de montée de la pression différentielle sur le filtre de surveillance.

10. Dispositif selon la revendication 9, **caractérisé en ce qu'**au moins un filtre de processus (14, 15, 16) et le filtre de surveillance (18) forment un sous-groupe.

11. Dispositif selon l'une quelconque des revendications 9 ou 10, **caractérisé en ce qu'**un débitmètre est prévu pour la mesure du débit sur le gaz de processus.

12. Dispositif selon la revendication 11, **caractérisé en ce que** le débitmètre est formé par un capteur de débit (26).

13. Dispositif selon la revendication 12, **caractérisé en ce que** de l'air comprimé est prévu comme gaz de processus.
